(19) **Europäisches Patentamt / European Patent Office / Office européen des brevets**

(11) **EP 1 747 848 B1**

(12) **EUROPÄISCHE PATENTSCHRIFT**

(45) Veröffentlichungstag und Bekanntmachung des Hinweises auf die Patenterteilung:
**16.12.2009  Patentblatt 2009/51**

(51) Int Cl.:
**B24B 5/35** (2006.01)       **B24B 49/12** (2006.01)

(21) Anmeldenummer: **06013302.2**

(22) Anmeldetag: **28.06.2006**

(54) **Vorrichtung zum Schleifen von Spinnzylindern**

Apparatus for grinding of spinning cylinders

Rectifieuse des cylindres pour machines à filer

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.07.2005  DE 102005035581**

(43) Veröffentlichungstag der Anmeldung:
**31.01.2007  Patentblatt 2007/05**

(73) Patentinhaber: **Rosink GmbH + Co. KG Maschinenfabrik**
**48529 Nordhorn (DE)**

(72) Erfinder: **Stentenbach, Udo**
**48531 Nordhorn (DE)**

(74) Vertreter: **Christophersen & Partner Patentanwälte**
**Feldstrasse 73**
**40479 Düsseldorf (DE)**

(56) Entgegenhaltungen:
**WO-A-01/49451      DE-A1- 19 954 734**
**JP-A- 1 170 802**

**Beschreibung**

Die Erfindung betrifft eine Vorrichtung zum Schleifen von Spinnzylindern nach dem Oberbegriff des Patentanspruchs 1.

Zum Einsatz kommen derartige Vorrichtungen, wie sie in grundsätzlicher Bauart aus der DE 32 26 573 A1 bekannt sind, im Rahmen der industriellen Verarbeitung von Textilfasern. In Spinnmaschinen übernehmen die Spinnzylinder den Transport der textilen Fasern. Hierbei unterliegen die in der Regel aus Kunststoff bestehenden Oberflächen der Spinnzylinder einem starken Verschleiß, weshalb sie häufig nachgeschliffen werden müssen. Der Durchmesser der Spinnzylinder ist von Haus aus so großzügig bemessen, dass die Zylinder mehrfach auf dafür eingerichteten Schleifmaschinen nachgeschliffen werden können, wobei jeweils nur wenige Zehntel oder Hundertstel Millimeter abgetragen werden. Nach einer solchen Schleifbehandlung ist die Oberfläche des Spinnzylinders wieder exakt rund und zylindrisch.

Zum Schleifen eines Spinnzylinders wird dieser in dem Schleifautomaten an einem automatisch arbeitenden Schlitten befestigt, der den Spinnzylinder selbsttätig gesteuert der Schleiffläche einer Schleifwalze zuführt. Die Handhabung des nachzuschleifenden Spinnzylinders kann mittels eines Schwenkarms erfolgen, der mit einer Aufnahme für die Achse des Spinnzylinders versehen Ist. Der Schwenkarm mit dem darin eingesetzten Spinnzylinder wird dann vollautomatisch gegen die Schleifwalze gefahren. Zur Berechnung der Stärke des Abschliffs ist der Schwenkarm üblicherweise mit einem Inkrementalgeber versehen, welcher den Schwenkwinkel und damit die Bewegung des Schwenkarms während des Schleifprozesses erfasst. Zum Einstellen des Nullpunkts wird jener Inkrementalpunkt erfasst, der sich beim Aufdrücken des Zylinders, d.h. beim ersten Kontakt mit der Schleiffläche, ergibt. Sodann wird der Zylinder geschliffen, wobei in der Praxis zwei verschiedene Verfahren angewendet werden. Nach einem ersten Verfahren werden die Zylinder alle auf einen bestimmten Durchmesser geschliffen. Nach einem zweiten Verfahren hingegen erhalten sie alle den gleichen Abtrag, und damit dieselbe Reduzierung ihres Durchmessers. Diese wird aus der am Inkrementalgeber ermittelten Schwenkwinkel-Differenz errechnet. Da es sich hierbei allerdings um ein indirektes Messverfahren handelt, wird die Messgenauigkeit von vielen Einflussfaktoren bestimmt, was in der Praxis zu keiner wirklich genauen Berechnung des Schleifergebnisses führt.

Die WO 01/49451 offenbart eine Schleifvorrichtung zum Schleifen von vor allem Papiermaschinenwalzen. Auf einer beweglich zu der Walze angeordneten Schleifeinrichtung der Maschine ist eine Messeinheit montiert, welche die Position der Schleifeinrichtung relativ zur Walze und relativ zu mindestens einer Bezugslinie außerhalb der Walze erfasst. Diese Bezugslinie wird durch einen oder zwei Spanndrähte gebildet, die parallel zur Walzenachse aufgespannt sind. Damit wird dem Umstand Rechnung getragen, dass die Walzenachse selbst zur Durchführung von Messungen nicht zugänglich ist. Insgesamt setzt sich die Messeinheit zusammen aus

-    einem Laserscanner zur Ortsbestimmung des Messsystems, ggf. ergänzt um einen Neigungsmesser,

-    einem nach dem Triangulatlonsprinzlp arbeitenden Distanzsensor zur Bestimmung des Abstands zur Außenfläche der Walze, und

-    einer Plattform zur gemeinsamen Befestigung des Laserscanners, des Neigungsmessers und des Distanzsensors.

Die Messgenaulgkeit zur Erfassung des Walzendurchmessers dieser Vorrichtung ist abhängig von der Genauigkeit, mit welcher die aus den ein oder zwei Spanndrähten gebildeten Bezugslinien positioniert sind. Sind die Drähte nicht exakt gespannt, arbeitet das System nicht mit der möglichen Genauigkeit.

Der Erfindung liegt die **Aufgabe** zugrunde, eine Vorrichtung zum Schleifen von Spinnzylindern zu schaffen, die eine exakte Messung der Zylindergeometrie ermöglicht und weitgehend frei von das Messergebnis verfälschenden Einflussfaktoren arbeitet.

Zur **Lösung** dieser Aufgabe wird eine Vorrichtung mit den in Patentanspruch 1 angegebenen Merkmalen vorgeschlagen.

Eine solche Vorrichtung ermöglicht eine direkte Messung der Geometrie des jeweils eingesetzten Spinnzylinders, d.h. seines Durchmessers bzw. Radius. Sie arbeitet weitgehend unabhängig von das Messergebnis verfälschenden Einflussfaktoren. Durch eine direkte Erfassung der Oberfläche des jeweiligen Spinnzylinders arbeitet die Messeinheit relativ unempfindlich gegenüber etwaigen Staubablagerungen. Auch die Härte bzw. Nachgiebigkeit des Materials der zu schleifenden Zylinder und der Zustand von deren Achsen wirken sich kaum auf das Messergebnis aus. Zur Genauigkeit trägt überdies bei, dass das Messsystem vollkommen berührungsfrei arbeitet und die Ausrichtung der Messstrahlen dergestalt ist, dass mindestens ein erster Messstrahl neben die Mittelachse des Spinnzylinders, und mindestens ein weiterer Messstrahl ebenfalls neben die Mittelachse, aber auf der dem ersten Messstrahl abgewandten Seite, gerichtet ist. Dies erlaubt nochmals präzisere Messergebnisse.

Gemäß einer bevorzugten Ausgestaltung arbeiten die Distanzsensoren mit einer Ausrichtung dergestalt, dass alle Messstrahlen die Mantelfläche des in die Aufnahme eingesetzten Spinnzylinders auf derselben axialen Länge des Spinnzylinders treffen. Auf diese Weise werden solche Messungenauigkeiten ausgeschlossen, wie sie bei einem leichten axialen Versatz der Messstrahlen auftreten können.

Gemäß einer konstruktiven Weiterbildung der Vorrichtung sind die Distanzsensoren an einem gemeinsamen Halter befestigt, was eine sehr exakte Positionierung der Sensoren und damit eine Verbesserung der Messgenauigkeit erlaubt. Vorzugsweise ist der Halter mit Formschlusselementen versehen, an oder in die die Distanzsensoren angesetzt sind. Zusätzlich kann eine Verschraubung mit dem Halter vorgesehen sein.

Mit einer weiteren Ausgestaltung wird vorgeschlagen, dass die Distanzsensoren starr mit der vorzugsweise als Schwenkarm gestalteten Aufnahme verbunden sind, bzw. dass der Halter starr mit dieser Aufnahme verbunden ist. Dies ermöglicht die Messung selbst jederzeit während des Ein- und Ausschwenkens des Schwenkarms, da auch dann der Spinnzylinder im Erfassungsbereich der Distanzsensoren liegt. Bereits beim Einrichten bzw. Vorbereiten des eigentlichen Schleifprozesses eine Erfassung des Ist-Zustandes des Spinnzylinders möglich ist. Unter keinen Umständen kann ein etwaiges Spiel des Schwenkarms die gelieferten Messergebnisse beeinflussen.

Ein Ausführungsbeispiel der Erfindung wird nachfolgend unter Bezugnahme auf die Zeichnungen beschrieben. Darin zeigen:

Fig. 1    Eine Seitenansicht einer Schleifmaschine mit einem darin eingesetzten zu schleifendem Spinnzylinder;

Fig. 2    Eine schematische Darstellung des grundsätzlichen Aufbaus sowie der Wirkungsweise eines nach dem Triangulationsprinzip arbeitenden Laser-Distanzsensors;

Fig. 3    Eine schematische Darstellung der Anordnung insgesamt dreier Laser-Distanzsensoren in Bezug auf den zu schleifenden Spinnzylinder;

Fig. 4    In einer perspektivischen Darstellung die Befestigung dreier Distanzsensoren an einer Halteplatte;

Fig. 5    Eine der Fig. 3 vergleichbare Darstellung zur Erläuterung der geometrischen Verhältnisse bei einer Radienbestimmung über drei Punkte und

Fig. 6    Eine weitere Darstellung zur Herleitung der geometrischen Verhältnisse.

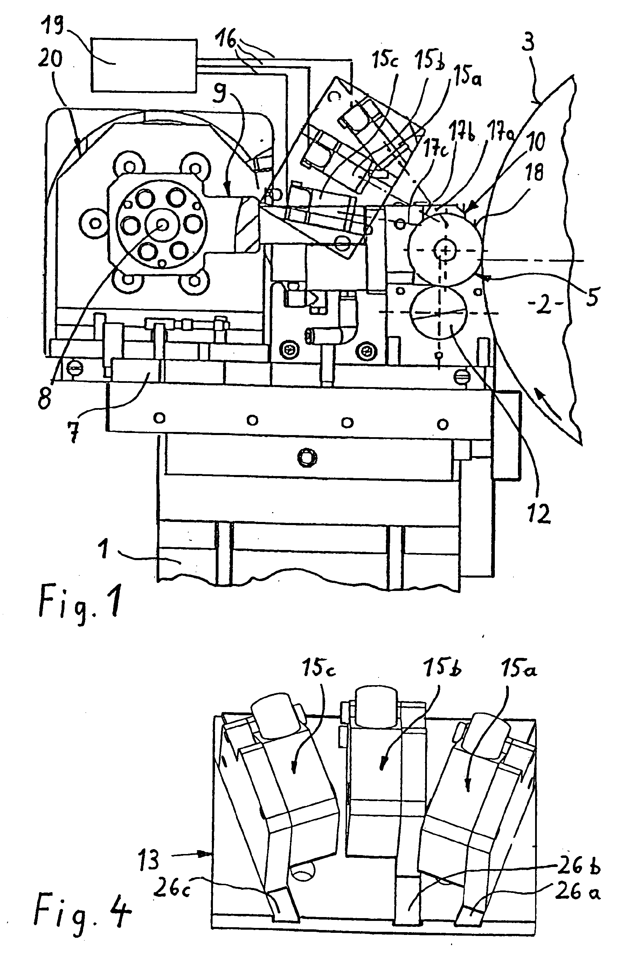

In Fig. 1 ist ausschnittsweise und stark vereinfacht eine Schleifmaschine zum Schleifen von Spinnzylindern dargestellt. Zum Einsatz kommen derartige Schleifmaschinen vor allem in Spinnereien. In Spinnereien übernehmen die Spinnzylinder als Transportrollen die Führung der textilen Fasern, hierbei unterliegen die Zylinder einem starken Verschleiß, weshalb ein häufiger Nachschliff erforderlich ist. Von Haus aus ist der Durchmesser der Spinnzylinder großzügig bemessen, weshalb sie sich mehrfach nachschleifen lassen.

Fig. 1 zeigt hierfür ein Gestell 1 der Schleifmaschine mit einer ebenfalls an dem Gestell 1 angeordneten, durch einen Antriebsmotor betriebenen Schleifwalze 2. Die Mantelfläche dieser Schleifwalze 2 bildet die Schleiffläche 3 zum Schleifen des auf der Zeichnung mit Bezugszeichen 5 versehenen Spinnzylinders. Zum Schleifen des Spinnzylinders 5 ist auf dem Gestell 1 ein Schlitten 7 horizontal, d.h. im wesentlichen in Richtung auf die Schleifwalze 2, verfahrbar. An dem Schlitten 7 ist bei 8 ein Schwenkarm 9 gelagert. An dem der Schleifwalze 2 zugewandten Ende ist der Schwenkarm 9 mit einer Aufnahme 10 für die Achse des Spinnzylinders 5 versehen. Durch Betätigung des Schwenkarms 9 infolge der Kraft F schwenkt dieser samt des darin eingesetzten Spinnzylinders 5 nach unten, wodurch der Spinnzylinder 5 an einer unterhalb angeordneten, angetriebenen Antriebswalze 12 anliegt. Infolge Reibung setzt die Antriebswalze 12 den Spinnzylinder 5 in Mitdrehung, so dass dieser beim Schleifprozess entgegen dem Drehsinn der Schleifwalze 2 dreht, und seine Oberfläche in Kontakt mit der Schleiffläche 3 der Schleifwalze 2 geschliffen wird.

An dem Schwenkarm 9 ist ein Halter 13 befestigt, an dem wiederum drei Distanzsensoren 15a, 15b, 15c befestigt sind. Die Messstrahlen 17a, 17b und 17c dieser Distanzsensoren 15a, 15b, 15c sind auf die Oberfläche, d.h. die Mantelfläche 18 des in der Schleifmaschine zu schleifenden Spinnzylinders 5 ausgerichtet.

Die Distanzsensoren 15a, 15b, 15c sind Bestandteil einer Einrichtung zum Feststellen, d.h. Berechnen der Größe des Spinnzylinders 5. Diese Einrichtung setzt sich zusammen aus den Distanzsensoren, sowie aus einer mit den Signalausgängen 16 der Distanzsensoren 15a, 15b, 15c verbundenen Recheneinheit 19. In der Recheneinheit 19 erfolgt die Herleitung des Durchmessers des Spinnzylinders 5 aus den von den drei Distanzsensoren erfassten drei geometrischen Werten. Zugleich steuert die Recheneinheit 19 den Antrieb 20 des Schlittens 7 sowie ggf. die auf den Schwenkarm 9 einwirkende Andrückkraft F, und steuert so den Schleifprozess.

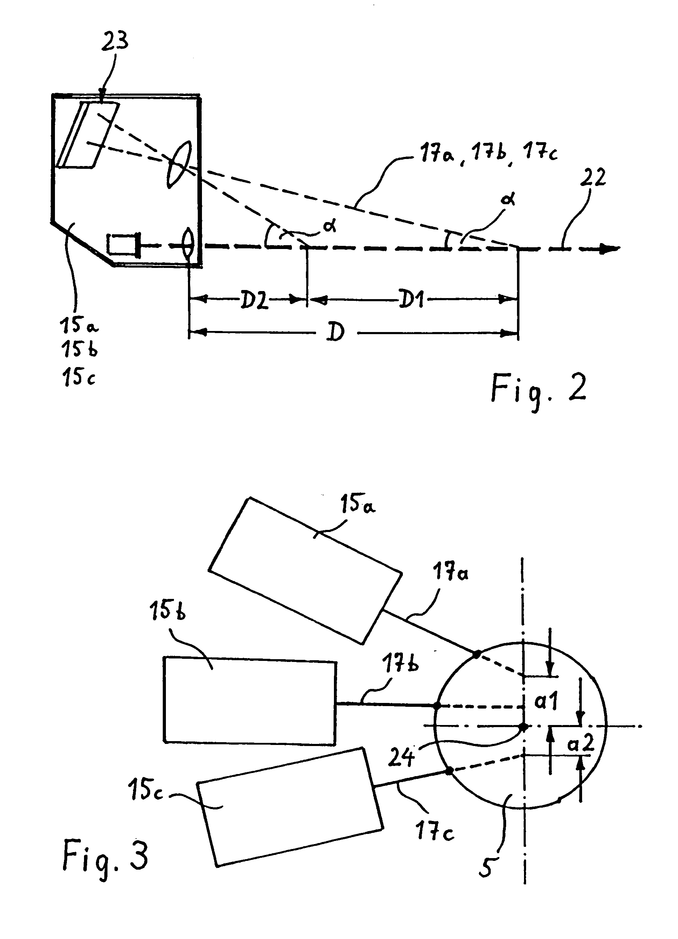

Einzelheiten zur Arbeitsweise der Distanzsensoren 15a, 15b, 15c werden im Folgenden anhand der Fig. 2 erläutert. Jeder der Distanzsensoren ist ein Laser-Distanzsensor, dessen Distanzmessung auf dem Triangulationsprinzip basiert. Ein vom Distanzsensor emittierter Laserstrahl 22 trifft als kleiner Punkt auf das Objekt auf. Der Empfänger 23 des Laser-Distanzsensors erfasst die Position dieses Punktes durch eine Winkeldetektion. Der Sensor misst grundsätzlich diesen Winkel α und berechnet dann die Distanz D zum Auftreffpunkt. In Fig. 2 ist ferner illustriert, wie sich die mögliche Auflösung und Genauigkeit des Distanzsensors mit der Distanz ändert. Die gleiche Distanz verursacht nahe dem Sensor eine große Winkeländerung, und weiter entfernt eine sehr viel kleinere Winkeländerung. Mittels eines Prozessors wird dieses nicht-lineare Verhalten korrigiert, so dass sich das Ausgangssignal 16 linear zur Distanz verhält. Mit D1 ist jener Distanzbereich bezeichnet, in welchem der Distanzsensor optimal arbeitet, wohingegen der Distanzbereich D2 vermieden werden sollte. Der Empfänger 23 im Inneren des Distanzsensors ist als lineare Photodiodenzeile ausgebildet. Das Auslesen der Photodiodenzeile erfolgt durch einen eingebauten Microcontroller. Aus der Lichtverteilung auf der Photodiodenzeile berechnet der Controller exakt den Winkel α, und aus diesem wiederum errechnet er die Distanz D zum Spinnzylinder. Diese Distanz wird entweder zu einem seriellen Port übertragen, oder in einen zur Distanz D proportionalen Ausgangsstrom umgewandelt. Durch die Kombination einer Photodiodenzeile mit einem Microcontroller lassen sich störende Reflexionen unterdrücken, weshalb auch bei einer kritischen Oberfläche des Spinnzylinders zuverlässige Daten ermittelt werden.

In Fig. 3 ist die geometrische Anordnung der drei Distanzsensoren 15a, 15b, 15c in Bezug auf den zu erfassenden Spinnzylinder 5 illustriert. Da die Mittelachse der teils einen größeren und teils einen geringeren Durchmesser aufweisenden Spinnzylinder variiert, ist zur Bestimmung des aktuellen Durchmessers des Spinnzylinders eine Messung über mindestens drei Punkte erforderlich. Es werden also insgesamt mindestens drei Distanzsensoren 15a, 15b, 15c benötigt. Fig. 3 lässt ferner erkennen, dass der erste Messstrahl 17a mit einem Abstand a1 neben die Mittelachse 24 des Spinnzylinders gerichtet ist. Der dritte Messstrahl 17c ist mit einem Abstand a2 ebenfalls neben die Mittelachse 24 gerichtet, jedoch auf der dem ersten Messstrahl 17a abgewandten Seite. Der mittlere 15b der Distanzsensoren ist so angeordnet, dass sein Messstrahl 17b die Mittelachse 24 des Spinnzylinders 5 nicht weit entfernt von der Mittelachse 24 trifft. Auf diese Weise ergeben sich größere Abstände a1 und a2 der Messstrahlen 17a und 17c und ein kleinerer Abstand des Messstrahls 17 b zur Mittelachse 24. Alle drei Meßstrahlen treffen, in Umfangsrichtung betrachtet, beabstandet zueinander auf die Oberfläche des Spinnzylinders 5.

In Fig. 4 ist die Anordnung der Distanzsensoren an dem gemeinsamen Halter 13 dargestellt. Der Halter 13 ist eine Platte, welche mit drei Nuten 26a, 26b, 26c versehen ist. In diese Nuten werden Aufnahmen für Distanzsensoren, die bereits mit den Sensoren verschraubt sind, eingelassen, wodurch die Distanzsensoren formschlüssig in dem Halter 13 sitzen. Dies ermöglicht eine nah beisammen liegende und sehr genaue Positionierung der drei Distanzsensoren zueinander, wobei deren Messstrahlen nicht zueinander parallel ausgerichtet sind. Zusätzlich erfolgt eine Verschraubung der Distanzsensoren mit dem Halter 13.

Bei dem dargestellten Ausführungsbeispiel ist der Halter 13, wie insbesondere Fig. 1 erkennen lässt, an dem Schwenkarm 9 befestigt. Ebenso ist es möglich, den Halter 13 ortsfest an dem Gestell 1 zu befestigen, wobei auch in diesem Fall die Ausrichtung der Sensoren dergestalt sein muss, dass die Messstrahlen an drei verschiedenen Punkten auf die Mantelfläche 18 des Spinnzylinders 5 gerichtet sind. Es besteht die Möglichkeit einer Reinigung der Distanzsensoren und des Spinnzylinders mittels eines von einer Drucklufteinrichtung erzeugten Druckluftstrahls.

Nachfolgend wird die Radien-/Durchmesserbestimmung über die drei Punkte erläutert, einschließlich der mathematischen Herleitung.

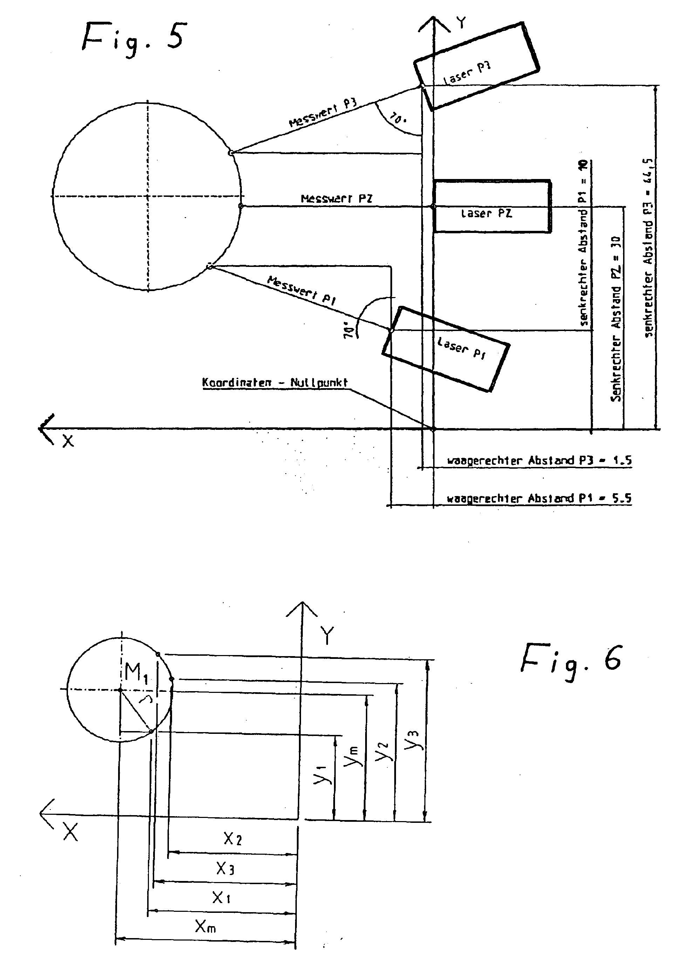

Zunächst müssen die Koordinatenpunkte festgelegt werden, was im folgenden anhand der Fig. 5 beschrieben wird. Der Koordinaten-Nullpunkt kann frei positioniert werden, z.B. waagerecht in eine Flucht mit dem Punkt 2 (waagerechter Abstand P2 = 0) und senkrecht 10mm unter dem untersten Laserpunkt (senkrechter Abstand P1 = 10). Um ein genaues Messergebnis zu erzielen, müssen die exakten waagerechten und senkrechten Abstände bestimmt werden. Hierzu sind die Laser-Distanzsensoren exakt auszurichten. Es müssen ihre waagerechten und senkrechten Abstände zueinander bestimmt werden. Diese werden mit Hilfe eines Normteils, z.B. eines Grenzlehrdorns sowie mit Hilfe der gemessenen Distanzen vom Sensor zum Normteil ermittelt. Auf diese Weise lässt sich das Messsystem kalibrieren und ist somit unempfindlicher gegenüber Einbautoleranzen. Für die drei Laser-Distanzsensoren (nachfolgend kurz "Laser") ergeben sich dann die folgenden Koordinaten (Fig.5):

Laser P1:

$$x_1 = \text{Messwert P1} * \sin 70° + \text{waagerechter Abstand P1}$$

$$y_1 = \text{Messwert P1} * \cos 70° + \text{senkrechter Abstand P1}$$

Laser P2:

$$x_2 = \text{Messwert P2}$$

$$y_2 = \text{senkrechter Abstand P2}$$

Laser P3:

$$x_3 = \text{Messwert P3} * \sin 70° + \text{waagerechter Abstand P3}$$

$$y_3 = \text{senkrechter Abstand P3} - \cos 70° * \text{Messwert P3}$$

Mit den drei festgelegten Bezugspunkten $P_1(x_1|y_1)$, $P_2(x_2|y_2)$, $P_3(x_3|y_3)$ auf einem Kreis lässt sich über die alltemeine Kreisgleichung eine geschlossene Formel für den Radius dieses Kreises (mit dem Mittelpunkt $M_1(x_m|y_m)$) wie folgt bestimmen:

Alle drei vorgegebenen Punkte haben zum Mittelpunkt $r$ definitionsgemäß den gleichen Abstand $r$ (den Radius des Kreises), der mittels dem Satz von Pythagoras bestimmbar ist:

I:

$$r^2 = \left(x_1 - x_m\right)^2 + \left(y_1 - y_m\right)^2$$

II:

$$r^2 = \left(x_2 - x_m\right)^2 + \left(y_2 - y_m\right)^2$$

III:

$$r^2 = \left(x_3 - x_m\right)^2 + \left(y_3 - y_m\right)^2$$

IV (I gleichgesetzt 11):

$$\left(x_1 - x_m\right)^2 + \left(y_1 - y_m\right)^2 = \left(x_2 - x_m\right)^2 + \left(y_2 - y_m\right)^2$$

V (II gleichgesetzt III):

$$r^2 = \left(x_2 - x_m\right)^2 + \left(y_2 - y_m\right)^2 = \left(x_3 - x_m\right)^2 + \left(y_3 - y_m\right)^2$$

Vi (für $x_m$ ergibt sich aus IV):

$$(x_1 - x_m)^2 + (y_1 - y_m)^2 = (x_2 - x_m)^2 + (y_2 - y_m)^2$$
$$\Leftrightarrow$$
$$(x_1^2 - 2x_1 x_m + x_m^2) + (y_1^2 - 2y_1 y_m + y_m^2) = (x_2^2 - 2x_2 x_m + x_m^2) + (y_2^2 - 2y_2 y_m + y_m^2)$$
$$\Leftrightarrow$$
$$x_1^2 - 2x_1 x_m + x_m^2 + y_1^2 - 2y_1 y_m + y_m^2 = x_2^2 - 2x_2 x_m + x_m^2 + y_2^2 - 2y_2 y_m + y_m^2$$
$$\Leftrightarrow$$
$$-2x_1 x_m + x_m^2 - (-2x_2 x_m + x_m^2) = x_2^2 + y_2^2 - 2y_2 y_m + y_m^2 - (x_1^2 + y_1^2 - 2y_1 y_m + y_m^2)$$
$$\Leftrightarrow$$
$$-2x_1 x_m + x_m^2 + 2x_2 x_m - x_m^2 = x_2^2 + y_2^2 - 2y_2 y_m + y_m^2 - x_1^2 - y_1^2 + 2y_1 y_m - y_m^2$$
$$\Leftrightarrow$$
$$-2x_1 x_m + 2x_2 x_m = x_2^2 + y_2^2 - 2y_2 y_m - x_1^2 - y_1^2 + 2y_1 y_m$$
$$\Leftrightarrow$$
$$(-2x_1 + 2x_2) \cdot x_m = x_2^2 + y_2^2 - x_1^2 - y_1^2 + (2y_1 - 2y_2) \cdot y_m$$
$$\Leftrightarrow$$
$$x_m = \frac{x_2^2 + y_2^2 - x_1^2 - y_1^2 + (2y_1 - 2y_2) \cdot y_m}{-2x_1 + 2x_2}$$

VII (analog ergibt sich aus V für x$_m$):

$$x_m = \frac{x_3^2 + y_3^2 - x_2^2 - y_2^2 + (2y_2 - 2y_3) \cdot y_m}{-2x_2 + 2x_3}$$

VIII (werden VI und VII gleichgesetzt, so ergibt sich):

$$\frac{x_2^2 + y_2^2 - x_1^2 - y_1^2 + (2y_1 - 2y_2) \cdot y_m}{-2x_1 + 2x_2} = \frac{x_3^2 + y_3^2 - x_2^2 - y_2^2 + (2y_2 - 2y_3) \cdot y_m}{-2x_2 + 2x_3}$$

$\Leftrightarrow$

$$\frac{x_2^2 + y_2^2 - x_1^2 - y_1^2}{-2x_1 + 2x_2} + \frac{2y_1 - 2y_2}{-2x_1 + 2x_2} \cdot y_m = \frac{x_3^2 + y_3^2 - x_2^2 - y_2^2}{-2x_2 + 2x_3} + \frac{2y_2 - 2y_3}{-2x_2 + 2x_3} \cdot y_m$$

$\Leftrightarrow$

$$\frac{x_2^2 - x_1^2 + y_2^2 - y_1^2}{2(x_2 - x_1)} + \frac{y_1 - y_2}{x_2 - x_1} \cdot y_m = \frac{x_3^2 - x_2^2 + y_3^2 - y_2^2}{2(x_3 - x_2)} + \frac{y_2 - y_3}{x_3 - x_2} \cdot y_m$$

$\Leftrightarrow$ (3. Binomische Formel)

$$\frac{(x_2 + x_1)(x_2 - x_1) + y_2^2 - y_1^2}{2(x_2 - x_1)} + \frac{y_1 - y_2}{x_2 - x_1} \cdot y_m = \frac{(x_3 + x_2)(x_3 - x_2) + y_3^2 - y_2^2}{2(x_3 - x_2)} + \frac{y_2 - y_3}{x_3 - x_2} \cdot y_m$$

$\Leftrightarrow$

$$\frac{(x_2 + x_1)}{2} + \frac{y_2^2 - y_1^2}{2(x_2 - x_1)} + \frac{y_1 - y_2}{x_2 - x_1} \cdot y_m = \frac{(x_3 + x_2)}{2} + \frac{y_3^2 - y_2^2}{2(x_3 - x_2)} + \frac{y_2 - y_3}{x_3 - x_2} \cdot y_m$$

$\Leftrightarrow$

$$\frac{(x_2 + x_1)}{2} + \frac{y_2^2 - y_1^2}{2(x_2 - x_1)} - \left( \frac{(x_3 + x_2)}{2} + \frac{y_3^2 - y_2^2}{2(x_3 - x_2)} \right) = \left( \frac{y_2 - y_3}{x_3 - x_2} - \frac{y_1 - y_2}{x_2 - x_1} \right) \cdot y_m$$

$\Leftrightarrow$

$$\frac{(x_2 + x_1)}{2} + \frac{y_2^2 - y_1^2}{2(x_2 - x_1)} - \frac{(x_3 + x_2)}{2} - \frac{y_3^2 - y_2^2}{2(x_3 - x_2)} = \left( \frac{y_2 - y_3}{x_3 - x_2} - \frac{y_1 - y_2}{x_2 - x_1} \right) \cdot y_m$$

$\Leftrightarrow$

$$\frac{\dfrac{(x_2 + x_1)}{2} + \dfrac{y_2^2 - y_1^2}{2(x_2 - x_1)} - \dfrac{(x_3 + x_2)}{2} - \dfrac{y_3^2 - y_2^2}{2(x_3 - x_2)}}{\left( \dfrac{y_2 - y_3}{x_3 - x_2} - \dfrac{y_1 - y_2}{x_2 - x_1} \right)} = y_m$$

$$y_m = \frac{x_1 - x_3 + \dfrac{y_2^2 - y_1^2}{x_2 - x_1} - \dfrac{y_3^2 - y_2^2}{x_3 - x_2}}{2 \cdot \left( \dfrac{y_2 - y_3}{x_3 - x_2} - \dfrac{y_1 - y_2}{x_2 - x_1} \right)}$$

IX (wird aus IV und V nicht jeweils $x_m$ berechnet, sondern $y_m$, so ergeben sich analog):

$$y_m = \frac{x_2^2 + y_2^2 - x_1^2 - y_1^2 + (2x_1 - 2x_2) \cdot x_m}{-2y_1 + 2y_2}$$

$$y_m = \frac{x_3^2 + y_3^2 - x_2^2 - y_2^2 + (2x_2 - 2x_3) \cdot x_m}{-2y_2 + 2y_3}$$

X (werden diese nun wiederum gleichgesetzt (wie zuvor VI und VII), so ergibt sich weiterhin analog):

$$x_m = \frac{\dfrac{x_2^{\,2} - x_1^{\,2}}{y_2 - y_1} - \dfrac{x_3^{\,2} - x_2^{\,2}}{y_3 - y_2} + y_1 - y_3}{2\left(\dfrac{x_2 - x_3}{y_3 - y_2} - \dfrac{x_1 - x_2}{y_2 - y_1}\right)}$$

XI (eine geschlossene Formel für r ergibt sich, indem $x_m$ und $y_m$ in I (oder wahlweise II oder III) eingesetzt werden:

$$r = \sqrt{\left(x_1 - \frac{\dfrac{x_2^{\,2} - x_1^{\,2}}{y_2 - y_1} - \dfrac{x_3^{\,2} - x_2^{\,2}}{y_3 - y_2} + y_1 - y_3}{2\left(\dfrac{x_2 - x_3}{y_3 - y_2} - \dfrac{x_1 - x_2}{y_2 - y_1}\right)}\right)^2 + \left(y_1 - \frac{x_1 - x_3 + \dfrac{y_2^{\,2} - y_1^{\,2}}{x_2 - x_1} - \dfrac{y_3^{\,2} - y_2^{\,2}}{x_3 - x_2}}{2\cdot\left(\dfrac{y_2 - y_3}{x_3 - x_2} - \dfrac{y_1 - y_2}{x_2 - x_1}\right)}\right)^2}$$

Alternativ ist auch ein geometrischer Ansatz möglich. Dabei werden die Punkte $P_1$, $P_2$ und $P_3$ als Eckpunkte eines Dreiecks aufgefasst.

Aus der Geometrie ist bekannt:

Die Mittelsenkrechten eines jeden Dreiecks schneiden sich im Mittelpunkt des Außenkreises dieses Dreiecks. Der Außenkreis des Dreiecks ist eben der gesuchte Kreis, auf dem alle drei Eckpunkte liegen.

Es genügt also den Schnittpunkt zweier solcher Mittelsenkrechter zu bestimmen, um den Mittelpunkt des Kreises zu ermitteln, auf dem $P_1$, $P_2$ und $P_3$ liegen.

Im Folgenden werden die Mittelsenkrechten A (auf der Strecke $S_1 = \overline{P_1 P_2}$) und B (auf der Strecke $S_2 = \overline{P_2 P_3}$) berechnet.

Mitteisenkrechten sind Geraden. Jede Gerade ist bestimmt, wenn ein Punkt auf dieser Geraden und deren Steigung bekannt ist.

Die Mittelsenkrechten A und B setzen genau in der Mitte der Strecken $S_1$ und $S_2$ auf, also in folgenden Koordinaten:

$$x_A = \frac{x_1 + x_2}{2}; \; y_A = \frac{y_1 + y_2}{2} \quad \text{und} \quad x_B = \frac{x_2 + x_3}{2}; \; y_B = \frac{y_2 + y_3}{2}$$

Damit sind für beide Mittelsenkrechten A und B bereits die Koordinaten jeweils eines Punktes bestimmt.

Die Steigung einer Geraden oder einer Strecke ergibt sich als $\dfrac{\Delta y}{\Delta x}$ (also als "Höhenunterschied pro Breitenunterschied").

Für die Strecken $S_1$ und $S_2$ sind das $\dfrac{y_2 - y_1}{x_2 - x_1}$ und $\dfrac{y_3 - y_2}{x_3 - x_2}$.

Die Steigung einer Senkrechten (also auch der beiden zu bestimmenden Mittelsenkrechten A und B) ergibt sich immer als negativer Kehrwert der Steigung der Geraden, von der ausgegangen wird, also gilt:

$$m_A = -\frac{x_2 - x_1}{y_2 - y_1} \quad \text{und} \quad m_B = -\frac{x_3 - x_2}{y_3 - y_2}$$

Für Geraden gibt es eine sogenannte "Normalform":

$$G(x) = mx + b$$

Für die Mittelsenkrechten A und B liegen $m_A$ und $m_B$ aus der letzten Berechnung bereits vor. Der sogenannte "y-Achsenabschnitt" $b$ ergibt sich aus der Steigung $m$ und den Koordinaten eines Punktes $x_p$ und $y_p$ durch folgende Formel:

$$b = y_p - m \cdot x_p,$$

also für A und B:

$$b_A = y_A - m_A \cdot x_A \text{ und } b_B = y_B - m_B \cdot x_B$$

Aus der Funktionalanalysis ist bekannt:

Die x-Koordinate des Schnittpunktes der Mittelsenkrechten A und B liegt bei:

$$x_m = \frac{b_B - b_A}{m_A - m_B}$$

Die y-Koordinate des Schnittpunktes ergibt sich als:

$$y_m = m_A \cdot x_m + b_A$$

Der Radius des Kreises ist dann:

$$r = \sqrt{(x_1 - x_m)^2 + (y_1 - y_m)^2}.$$

**Bezuaszeichenliste**

| | |
|---|---|
| 1 | Gestell |
| 2 | Schleifwalze |
| 3 | Schleiffläche |
| 5 | Spinnzylinder |
| 7 | Schlitten |
| 8 | Lagerung |
| 9 | Schwenkarm |
| 10 | Aufnahme für den Spinnzylinder |
| 12 | Antriebswalze |
| 13 | Halter |
| 15a | Distanzsensor (Laser) |
| 15b | Distanzsensor (Laser) |
| 15c | Distanzsensor (Laser) |
| 16 | Ausgangssignal |

| 17a | Messstrahl |
|---|---|
| 17b | Messstrahl |
| 17c | Messstrahl |
| 18 | Mantelfläche |
| 19 | Recheneinheit |
| 20 | Antrieb |
| 22 | Laserstrahl |
| 23 | Empfänger, Photodiodenzeile |
| 24 | Mittelachse |
| 26a | Nut |
| 26b | Nut |
| 26c | Nut |

| a1 | Abstand |
|---|---|
| a2 | Abstand |
| D | Distanz |
| D1 | Distanzbereich |
| D2 | Distanzbereich |
| F | Kraft |
| $P_1$ | geometrischer Punkt |
| $P_2$ | geometrischer Punkt |
| $P_3$ | geometrischer Punkt |
| $\alpha$ | Winkel |

**Patentansprüche**

1. Vorrichtung zum Schleifen von Spinnzylindern,
mit einer rotierenden Schleiffläche (3),
mit einer Aufnahme (10), in die der zu schleifende Spinnzylinder einsetzbar ist,
mit Mitteln (7, 20) zum Heranführen der Aufnahme (10) in Richtung zur Schleiffläche (3) bis zum Kontakt des in die Aufnahme (10) eingesetzten Spinnzylinders mit der Schleiffläche (3),
mit einer Einrichtung zum Feststellen der Größe des in die Aufnahme eingesetzten Spinnzylinders, wobei sich diese Einrichtung zusammensetzt aus Erfassungsmitteln (15a, 15b, 15c) für mindestens einen geometrischen Wert, wobei dieser Wert nicht die Größe des Spinnzylinders ist, und einer Recheneinheit (19) zur Herleitung der Größe des Spinnzylinders aus dem von den Erfassungsmitteln (15a, 15b, 15c) erfassten geometrischen Wert, und wobei die Erfassungsmittel Distanzsensoren (15a, 15b, 15c) sind, deren Messstrahlen auf die Mantelfläche eines in die Aufnahme (10) eingesetzten Spinnzylinders treffen,
**gekennzeichnet durch**
drei Distanzsensoren (15a, 15b, 15c) mit einer Ausrichtung dergestalt, dass ihre drei Messstrahlen (17a, 17b, 17c) die Mantelfläche an drei in Umfangsrichtung des Spinnzylinders zueinander beabstandeten Punkten treffen, wobei zumindest ein erster Messstrahl (17a) neben die Mittelachse (24) des Spinnzylinders, und mindestens ein weiterer Messstrahl (17c) ebenfalls neben die Mittelachse (24), aber auf der dem ersten Messstrahl (17a) abgewandten Seite, gerichtet ist.

2. Vorrichtung nach Anspruch 1,
**gekennzeichnet durch**
eine Ausrichtung dergestalt, dass alle Messstrahlen (17a, 17b, 17c) die Mantelfläche des in die Aufnahme eingesetzten Spinnzylinders auf derselben axialen Länge des Spinnzylinders treffen.

3. Vorrichtung nach Anspruch 1,
**dadurch gekennzeichnet,**
**dass** die Messstrahlen (17a, 17b, 17c) nicht zueinander parallel ausgerichtet sind.

4. Vorrichtung nach einem der vorangehenden Ansprüche,
**dadurch gekennezeichnet,**
**dass** die Distanzsensoren (15a, 15b, 15c) an einem gemeinsamen Halter (13) befestigt sind.

**5.** Vorrichtung nach Anspruch 4,
**dadurch gekennzeichnet,**
**dass** der Halter (13) mit Formschlusselementen (26a, 26b, 26c) versehen ist, an oder in die die Distanzsensoren (15a, 15b, 15c) angesetzt sind.

**6.** Vorrichtung nach Anspruch 5,
**dadurch gekennzeichnet,**
**dass** die an oder in die Formschlusselemente (26a, 26b, 26c) angesetzten Distanzsensoren zusätzlich mit dem Halter (13) verschraubt sind.

**7.** Vorrichtung nach einem der vorangehenden Ansprüche,
**dadurch gekennzeichnet,**
**dass** die Distanzsensoren (15a, 15b, 15c) starr mit der Aufnahme (10) verbunden sind.

**8.** Vorrichtung nach Anspruch 6,
**dadurch gekennzeichnet,**
**dass** der Halter (13) starr mit der Aufnahme (10) verbunden ist.

**9.** Vorrichtung nach einem der vorangehenden Ansprüche,
**gekennzeichnet durch,**
den Einsatz von nach dem Triangulationsprinzip arbeitenden Distanzsensoren (15a, 15b, 15c), insbesondere Laser-Distanzsensoren..

**10.** Vorrichtung nach einem der vorangehenden Ansprüche,
**gekennzeichnet durch,**
eine Drucklufteinrichtung zur Reinigung der Distanzsensoren (15a, 15b, 15c) und des Spinnzylinders.

**Claims**

**1.** Apparatus for grinding spinning cylinders,
comprising a rotating grinding surface (3),
comprising a receptacle (10) into which the spinning cylinder to be ground can be inserted,
comprising means (7, 20) for advancing the receptacle (10) in the direction of the grinding surface (3) until the spinning cylinder inserted into the receptacle (10) comes into contact with the grinding surface (3),
comprising a device for determining the size of the spinning cylinder inserted into the receptacle, wherein this device is composed of detection means (15a, 15b, 15c) for at least one geometrical value, wherein this value is not the size of the spinning cylinder, and a computing unit (19) for deriving the size of the spinning cylinder from the geometrical value detected by the detection means (15a, 15b, 15c), and wherein the detection means are distance sensors (15a, 15b, 15c), the measuring beams of which strike the lateral surface of a spinning cylinder inserted into the receptacle (10),
**characterized by**
three distance sensors (15a, 15b, 15c) which are oriented in such a way that their three measuring beams (17a, 17b, 17c) strike the lateral surface at three points at a distance from one another in the circumferential direction of the spinning cylinder, wherein at least one first measuring beam (17a) is directed beside the centre axis (24) of the spinning cylinder, and at least one further measuring beam (17c) is likewise directed beside the centre axis (24) but on the side facing away from the first measuring beam (17a).

**2.** Apparatus according to Claim 1, **characterized by** an orientation such that all the measuring beams (17a, 17b, 17c) strike the lateral surface of the spinning cylinder inserted into the receptacle at the same axial length of the spinning cylinder.

**3.** Apparatus according to Claim 1, **characterized in that** the measuring beams (17a, 17b, 17c) are not oriented parallel to one another.

**4.** Apparatus according to one of the preceding claims, **characterized in that** the distance sensors (15a, 15b, 15c) are fastened to a common holder (13).

5. Apparatus according to Claim 4, **characterized in that** the holder (13) is provided with positive-locking elements (26a, 26b, 26c) on or in which the distance sensors (15a, 15b, 15c) are placed.

6. Apparatus according to Claim 5, **characterized in that** the distance sensors placed on or in the positive-locking elements (26a, 26b, 26c) are additionally screwed to the holder (13).

7. Apparatus according to one of the preceding claims, **characterized in that** the distance sensors (15a, 15b, 15c) are rigidly connected to the receptacle (10).

8. Apparatus according to Claim 6, **characterized in that** the holder (13) is rigidly connected to the receptacle (10) .

9. Apparatus according to one of the preceding claims, **characterized by** the use of distance sensors (15a, 15b, 15c), in particular laser distance sensors, working according to the triangulation principle.

10. Apparatus according to one of the preceding claims, **characterized by** a compressed-air device for cleaning the distance sensors (15a, 15b, 15c) and the spinning cylinder.

**Revendications**

1. Dispositif de rectification de cylindres de filage,
   avec une surface de rectification rotative (3),
   avec un logement (10), dans lequel le cylindre de filage à rectifier peut être inséré,
   avec des moyens (7, 20) d'approche du logement (10) en direction de la surface de rectification (3) jusqu'à ce que le cylindre de filage inséré dans le logement (10) entre en contact avec la surface de rectification (3),
   avec un équipement de détermination de la dimension du cylindre de filage inséré dans le logement, cet équipement se composant de moyens de détection (15a, 15b, 15c) pour au moins une valeur géométrique, cette valeur n'étant pas la dimension du cylindre de filage, et d'une unité de calcul (19) permettant de déduire la dimension du cylindre de filage à partir de la valeur géométrique détectée par les moyens de détection (15a, 15b, 15c), et les moyens de détection étant des capteurs de distance (15a, 15b, 15c) dont les faisceaux de mesure touchent la surface de l'enveloppe d'un cylindre de filage inséré dans le logement (10),
   **caractérisé par**
   trois capteurs de distance (15a, 15b, 15c) orientés de telle sorte que leurs trois faisceaux de mesure (17a, 17b, 17c) touchent la surface de l'enveloppe en trois points distants les uns des autres dans le sens périphérique du cylindre de filage, au moins un premier faisceau de mesure (17a) étant dirigé à côté de l'axe médian (24) du cylindre de filage, et au moins un autre faisceau de mesure (17c) étant également dirigé à côté de l'axe médian (24), mais sur le côté opposé à celui du premier faisceau de mesure (17a).

2. Dispositif selon la revendication 1,
   **caractérisé par**
   une orientation telle que tous les faisceaux de mesure (17a, 17b, 17c) touchent la surface de l'enveloppe du cylindre de filage inséré dans le logement sur la même longueur axiale du cylindre de filage.

3. Dispositif selon la revendication 1,
   **caractérisé en ce que**
   les faisceaux de mesure (17a, 17b, 17c) ne sont pas orientés parallèlement l'un à l'autre.

4. Dispositif selon l'une quelconque des revendications précédentes,
   **caractérisé en ce que**
   les capteurs de distance (15a, 15b, 15c) sont fixés sur un support commun (13).

5. Dispositif selon la revendication 4,
   **caractérisé en ce que**
   le support (13) est doté d'éléments à correspondance de forme (26a, 26b, 26c), au niveau desquels ou dans lesquels les capteurs de distance (15a, 15b, 15c) sont mis en place.

6. Dispositif selon la revendication 5,
   **caractérisé en ce que**

les capteurs de distance mis en place au niveau ou dans les éléments à correspondance de forme (26a, 26b, 26c) sont vissés en plus avec le support (13).

7. Dispositif selon l'une quelconque des revendications précédentes,
   **caractérisé en ce que**
   les capteurs de distance (15a, 15b, 15c) sont reliés au logement (10) de manière rigide.

8. Dispositif selon la revendication 6,
   **caractérisé en ce que**
   le support (13) est relié au logement (10) de manière rigide.

9. Dispositif selon l'une quelconque des revendications précédentes,
   **caractérisé par**
   l'utilisation de capteurs de distance (15a, 15b, 15c) fonctionnant selon le principe de la triangulation, en particulier des capteurs de distance laser.

10. Dispositif selon l'une quelconque des revendications précédentes,
   **caractérisé par**
   un équipement d'air comprimé servant à nettoyer les capteurs de distance (15a, 15b, 15c) et le cylindre de filage.

Fig. 1

Fig. 4

Fig. 2

Fig. 3

Fig. 5

Laser P3

Messwert P3

70°

Y

Messwert PZ

Laser PZ

senkrechter Abstand P1 = 90

senkrechter Abstand P3 = 44,5

Senkrechter Abstand PZ = 30

Messwert P1

70°

Laser P1

Koordinaten - Nullpunkt

X

waagerechter Abstand P3 = 1.5

waagerechter Abstand P1 = 5.5

Y

Fig. 6

$M_1$

$y_1$

$y_m$

$y_2$

$y_3$

X

$X_2$

$X_3$

$X_1$

$X_m$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3226573 A1

- WO 0149451 A